# EUROPÄISCHE PATENTSCHRIFT

(11) **EP 2 509 894 B1**
(45) Veröffentlichungstag und Bekanntmachung des Hinweises auf die Patenterteilung: **30.10.2013**
(21) Anmeldenummer: 10779452.1
(22) Anmeldetag: 10.11.2010
(51) Int. Cl.: B65G 47/256

(54) **VORRICHTUNG ZUM AUSSORTIEREN VON FALSCH POSITIONIERTEN ZYLINDRISCHEN KÖRPERN IN EINER VEREINZELUNGS- UND FÖRDEREINRICHTUNG**
DEVICE FOR SORTING OUT INCORRECTLY POSITIONED CYLINDRICAL BODIES IN A SEPARATING AND CONVEYING UNIT
DISPOSITIF POUR TRIER ET ÉLIMINER DES CORPS CYLINDRIQUES MAL POSITIONNÉS DANS UN DISPOSITIF DE SÉPARATION ET DE TRANSPORT

(30) Priorität: 11.12.2009 CH 19112009
(43) Veröffentlichungstag der Anmeldung: 17.10.2012
(73) Patentinhaber: M. Tanner AG, 8308 Illnau (CH)
(72) Erfinder: TANNER, Marcel, CH-8303 Bassersdorf (CH)
(74) Vertreter: Schaad, Balass, Menzl & Partner AG
(86) Internationale Anmeldenummer: PCT/CH2010/000282
(87) Internationale Veröffentlichungsnummer: WO 2011/069268

(56) Entgegenhaltungen:
- WO-A2-2008/016688
- DE-T2- 60 118 772

## Beschreibung

Die Erfindung betrifft eine Vorrichtung zum Aussortieren von falsch positionierten zylindrischen Körpern, wie-Vorformlinge für Hohlkörper, in einer Vereinzelungs- und Fördervorrichtung, wobei die zylindrischen Körper einen Kopf mit einem Kragen aufweisen, mit einem Rollensortierer, welcher zwei in Förderrichtung parallel und mit Abstand zueinander angeordnete Rollen aufweist, zwischen welchen die zylindrischen Körper hängend positioniert sind, und mit einer Auswurfeinrichtung mittels welcher nicht korrekt zwischen den Rollen positionierte zylindrische Körper aus der Vorrichtung ausgeschieden werden. Eine derartige Vorrichtung ist aus der DE 601 18 772 T2 bekannt.

Üblicherweise werden zylindrische Körper, wie Vorformlinge von PET-Flaschen, auch Preforms genannt, als Stückgut ungeordnet in grossen Behältern angeliefert und über eine Beschickungseinrichtung zu einer Vereinzelungseinrichtung geführt. Die Vereinzelungseinrichtung richtet die Vorformlinge auf und bildet eine Einzelreihe der Vorformlinge, welche die Vereinzelungseinrichtung beispielsweise über eine schräg nach unten gerichtete Rutsche, auch Ablaufschiene genannt, verlässt. Von da gelangen die Vorformlinge zu Prüf- und Fördereinrichtungen und schliesslich zu einer Streckblasmaschine, wo ihr zylindrischer Körper zu einer gewünschten Flaschenform aufgeblasen wird. Die Vorformlinge weisen typischerweise an einem offenen Ende einen Kopf mit einem Gewindestutzen und einem Kragen oder Tragring auf, welcher einen grösseren Durchmesser als der übrige Zylinderteil des Vorformlings aufweist.

DE 601 18 772 T2 beschreibt eine Vereinzelungseinrichtung für Vorformlinge, welche als Rollenförderer bzw. Rollensortierer ausgebildet ist. Diese weist zwei beabstandet zueinander angeordnete Rollen auf, welche am trichterförmigen Boden eines langgestreckten Behälters angeordnet sind. Die Rollen rotieren um ihre Längsachsen und bilden eine Förderbahn, die üblicherweise mit einem geringen Gefälle verläuft. Die Vorformlinge werden in einer Einzelreihe hintereinander geführt durch diesen Rollenförderer transportiert. Hierzu liegen sie mit ihren Kragen auf den Rollen auf, wobei aufgrund der Schwerkraft ihre Körper mit dem Zylinderteil im Spalt zwischen den Rollen frei hinunter hängen. Vorformlinge, welche nicht die korrekte Position einnehmen und deshalb über eine vorgegebene Höhe hinausragen, werden mittels eines rotierenden Kickerrades oder Rückstaurades aus der Förderbahn weggeschleudert und gelangen in einen hinteren Bereich des Rollenförderers oder in einen Überlaufbereich, von wo sie wieder in einen Einfüllbehälter des Rollenförderers gefördert werden. Aufgrund der hohen Förderleistung solcher Vereinzelungseinrichtungen ist eine sehr hohe Zuverlässigkeit und Störungsfreiheit gefordert, um Stillstandszeiten der nachfolgenden Produktionsanlage mit entsprechenden Folgekosten zu vermeiden. Bei der bekannten Einrichtung können beispielsweise Vorformlinge, welche mit dem Kragen auf einem Kragen eines benachbarten Vorformlings aufliegen oder Vorformlinge, welche horizontal auf dem Spalt zwischen den Rollen liegen, nicht erfasst und ausgeworfen werden. Dadurch entstehen in den nachfolgenden Bereichen der Anlage Störungen und folglich Betriebsunterbrüche. Es zeigt sich, dass die Zuverlässigkeit dieser bekannter Vereinzelungseinrichtungen den hohen Anforderungen nicht gerecht wird, und eine weitere Verbesserung der Betriebssicherheit erforderlich ist.

Aus der WO 2008/016688 A2 ist eine Ausrichte- und Zuführvorrichtung für Vorformlinge bekannt, welche Ablenkmittel für fehlausgerichtete Vorformlinge aufweist. In korrekter Ausrichtung zugeführte Vorformlinge werden in einer Lücke zwischen zwei Bändern entlang der Transportrichtung zur Streckblasmaschine transportiert. Ein in schräger Ausrichtung zur Transportrichtung zugeführter Vorformling wird durch einen Luftstrom ablenkt, welcher von einer Blasdüse erzeugt wird. Die Blasdüse richtet den Luftstrom durch eine Öffnung in einer Leitwand der Vorrichtung und zwar an einer Stelle nahe am Ausgabeende, wo die Ablenkung erfolgen soll.

Aus praktischen Anwendungen und aus der am 21.01.2010 veröffentlichten WO 2010/006462 A1 ist eine Vorrichtung bekannt, mit welcher Vorformlinge, welche mit dem Kragen auf einem Kragen eines benachbarten Vorformlings aufliegen oder Vorformlinge, welche horizontal auf dem Spalt zwischen den Rollen liegen, erkannt und aussortiert bzw. ausgeschieden werden können. Diese Vorrichtung verfügt über Sensoren, beispielsweise optische Sensoren oder Ultraschallsensoren, welche falsch positionierte Vorformlinge erkennen und aussortieren können. Das Aussortieren erfolgt dabei mittels einer Auswurfvorrichtung, welche unterhalb des Rollensortierer bzw. Rollenförderers angeordnet ist und mit einem Auswurfmittel in den Zwischenraum zwischen den Rollen eingreift und falsch positionierte Vorformlinge ausstösst. Zusätzlich sind auf der Höhe der Oberkante der beiden Rollen des Rollenförderers Luftdüsen angeordnet, deren Luftstrom etwa rechtwinklig zur Förderrichtung der Vorformlinge im Rollenförderer wirkt. Dabei wird der Luftstrom durch die Sensoren aktiviert und auf den Rollen aufliegende Vorformlinge oder vom Ausfuhrmittel ausgestossene Vorformlinge werden zuverlässig vom Rollenförderer weg, in eine seitlich davon angeordnete Auffangvorrichtung geblasen und aussortiert. Diese Vorrichtung führt bereits zu einer sehr hohen Zuverlässigkeit und Störungsfreiheit, da fast alle Varianten von falsch positionierten Vorformlingen erfasst und aussortiert werden können. Schwierigkeiten können dann noch auftreten, wenn Vorformlinge so auf den Rollen aufliegen, dass sie dem Luftstrom keine genügende Angriffsfläche bieten. Dieses Problem tritt insbesondere bei den in neuerer Zeit vermehrt zur Anwendung gelangenden Vorformlingen mit grossem Kopfdurchmesser, für sogenannte Weithalsbehälter, auf.

Es ist deshalb Aufgabe der Erfindung, eine Vorrichtung zum Aussortieren von falsch positionierten zylindrischen Körpern, wie Vorformlingen für Hohlkörper zu schaffen, welche die oben genannten Nachteile behebt. Insbesondere soll die Erfindung gewährleisten, dass bis anhin nicht aussortierbare, falsch positionierte Vorformlinge mit hoher Zuverlässigkeit erkannt und automatisch aussortiert bzw. ausgeworfen werden. Zudem soll die Vorrichtung in einfacher Weise auf unterschiedliche Formen von Vorformlingen anpassbar sein.

Diese Aufgabe wird in Verbindung mit dem Oberbegriff des Patentanspruches 1 erfindungsgemäss dadurch gelöst, dass die Auswurfeinrichtung seitlichneben den Rollen angeordnete Luftdüsen zum Wegblasen falsch positionierter zylindrischer Körper aufweist, dass mindestens eine Luftdüse so ausgerichtet ist, dass die Strömungsachse des aus der Düse austretenden Luftstromes etwa quer zur Förderrichtung der zylindrischen Körper gerichtet ist und mit einem Anstellwinkel gegen den Kopf der der zylindrischen Körper gerichtet ist und dass die Luftdüse schwenkbar befestigt und der Anstellwinkel der Strömungsachse des Luftstromes gegenüber dem Kopf der zylindrischen Körper einstellbar ist.

Mit dieser erfindungsgemässen Vorrichtung können insbesondere sogenannt vernestete Vorformlinge, welche zwar hängend positioniert sind, dabei aber mehrere Vorformlinge ineinander stecken, voneinander getrennt und/oder ausgeblasen werden. Dieses Problem tritt bei Vorformlingen mit grossem Kopfdurchmesser, auch Weithals-Vorformlinge genannt, vermehrt auf, wobei die erfindungsgemässe Lösung Störungen des Betriebsablaufes durch derartige Fehlpositionen verhindert. Aber auch wenn derartige Vorformlinge mit grossem Kopfdurchmesser, bzw. Weithals-Vorformlinge, auf den Rollen aufliegen und das dünne zylindrische Ende der Vorformlinge dem Luftstrom, bei den vorbekannten Lösungen, keinen genügenden Widerstand bietet, ist ein Ausblasen und Aussortieren möglich. Die Erfassung der falsch positionierten Vorformlinge erfolgt dabei durch optoelektronische Sensoren, welche in Verbindung mit einer Steuereinrichtung eine Ausstossvorrichtung und/oder die Luftdüsen aktivieren.

Eine vorteilhafte Ausbildung des Erfindungsgegenstandes sieht vor, dass der Querschnitt des aus der Luftdüse austretenden Luftstromes eine langgestreckte Form aufweist und die in Förderrichtung der zylindrischen Körper gerichtete Breite des Querschnitts eine grössere Abmessung aufweist als die etwa rechtwinklig dazu gerichtete Höhe des Querschnitts. Diese Ausgestaltung des Querschnitts des Luftstromes, welcher aus der Luftdüse austritt, ermöglicht eine bessere Erfassung der unterschiedlichen Formen der Vorformlinge und erzeugt eine grössere Anblaskraft an der vom Luftstrom beaufschlagten Oberfläche der Vorformlinge. Damit kann die Sicherheit der Aussortierung von falsch positionierten Vorformlingen erhöht werden. Zudem wird die Sicherheit, dass ein falsch positionierter Vorformling vom Luftstrom erfasst wird, erhöht, da der Vorformling eine gewisse Zeit benötigt, um in Förderrichtung durch den langgestreckten Luftstrom bewegt zu werden.

Eine weitere Ausbildung der Erfindung sieht vor, dass in Förderrichtung der zylindrischen Körper gesehen, mehrere Luftdüsen nacheinander angeordnet sind, mindestens bei einer ersten Düse die Strömungsachse des Luftstromes etwa parallel zu einer, durch die Achsen der beiden Transportrollen gelegten fiktiven Ebene ausgerichtet ist. Diese Ausgestaltung erhöht die Sicherheit der Aussortierung von falsch positionierten Vorformlingen ebenfalls zusätzlich, indem Vorformlinge, welche sich als Folge ihrer Position auf den Rollen oder ihrer Bewegungsbahn durch die Ausstossvorrichtung ausserhalb des schrägen Luftstromes befinden, durch den parallel zur fiktiven Rollenebene angeordneten Luftstrom erfasst und aussortiert werden.

Gemäß einer weiteren Ausbildung wird vorgeschlagen, dass die Luftdüse mehrere in Förderrichtung der zylindrischen Körper nebeneinander angeordnete Luftaustrittsöffnungen aufweist und die Gesamtbreite des Querschnittes des aus diesen Öffnungen austretenden Luftstromes mindestens doppelt so gross ist wie die Höhe des Luftstromes. Mit dieser Ausführungsform wird erreicht, dass die Form des Querschnitts des Luftstromes verändert werden kann, indem die Anzahl der Öffnungen und/oder deren Form unterschiedlich ausgestaltet wird. Dies ermöglicht eine Verbesserung der Ausblassicherheit von falsch positionierten Vorformlingen.

Eine weitere zweckmässige Ausgestaltung des Erfindungsgegenstandes sieht vor, dass über den Rollen des Rollensortierers und im Auflagebereich der Kragen der zylindrischen Körper auf diesen Transportrollen mindestens ein Ablenkelement angeordnet ist, wobei die Längsachse dieses Ablenkelementes schräg gegen die Transportrichtung der zylindrischen Körper gerichtet ist und dass das gegen die Transportrollen gerichtete Ende dieses Ablenkelementes die Transportrollen nicht berührt. In zweckmässiger Weise schliesst die Längsachse des Ablenkelementes mit der Längsachse einer der Transportrollen einen Winkel von 30-60° ein und das Ablenkelement ist ein Rundstab mit einem konischen Ende. Dieses Ablenkelement ergänzt die Luftdüsen und die Ausstossvorrichtung in vorteilhafter Weise. Wenn Vorformlinge etwa rechtwinklig zur Förderrichtung auf den Rollen aufliegen und dabei der Kopf der Vorformlinge schräg im Zwischenraum der Rollen liegt, ist die Erfassung eines derartigen falsch positionierten Vorformlings durch den Luftstrom erschwert. Ein derartig falsch positionierter Vorformling stösst durch die Förderbewegung gegen das Ablenkelement und wird dadurch in eine andere Position gebracht, in welcher er durch den Luftstrom besser erfasst und ausgeworfen werden kann.

Eine weitere Ausbildung der Erfindung sieht vor, dass über dem Rollensortierer und in Förderrichtung gesehen vor der Auswurfeinrichtung mit der Ausblasvorrichtung und der Ausstossvorrichtung, ein optoelektronischer Sensor mit einer Steuereinrichtung für die Auswurfeinrichtung angeordnet ist. Dabei gelangen an sich bekannte Sensoren zur Anwendung, welche auf optischem Wege Form und Lage der Vorformlinge und falsch positionierte Vorformlinge feststellen können. Sobald ein falsch positionierter Vorformling erkannt wird, wird ein Fehlersignal erzeugt und die Steuereinrichtung setzt die Auswurfeinrichtung in Betrieb, bis der falsch positionierte Vorformling aussortiert und ausgeschieden ist. Anstelle eines optoelektronischen Sensors sind auch andere Sensoren denkbar, wie Ultraschallsensoren oder mechanische Fühler.

Die oben beschriebenen Vorrichtungen eignen sich grundsätzlich nicht nur für das Aussortieren von Vorformlingen, sondern von allen länglichen Stückgütern, welche einen Stütz- oder Tragring oder eine Auflagefläche oder einen Kragen aufweisen.

Im Folgenden wird die Erfindung anhand von Ausführungsbeispielen unter Bezugnahme auf die beiliegenden Zeichnungen näher erläutert. Es zeigen jeweils in schematischer Darstellung:
- Fig.1: eine Seitenansicht einer erfindungsgemässen Vorrichtung zum Aussortieren von falsch positionierten Vorformlingen,
- Fig. 2: einen Querschnitt durch die Vorrichtung im Bereiche der Luftdüsen gegen die Förderrichtung gesehen,
- Fig. 3: eine Aufsicht auf den Rollensortierer im Bereiche der Luftdüsen,
- Fig. 4: eine schematische Darstellung einer verstellbaren Luftdüse mit schräger Achse des Luftstromes,
- Fig. 5: eine schematische Darstellung einer verstellbaren Luftdüse mit paralleler Achse des Luftstromes, und
- Fig. 6: eine perspektivische Darstellung einer Luftdüse mit mehreren Luftaustritts-Öffnungen.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

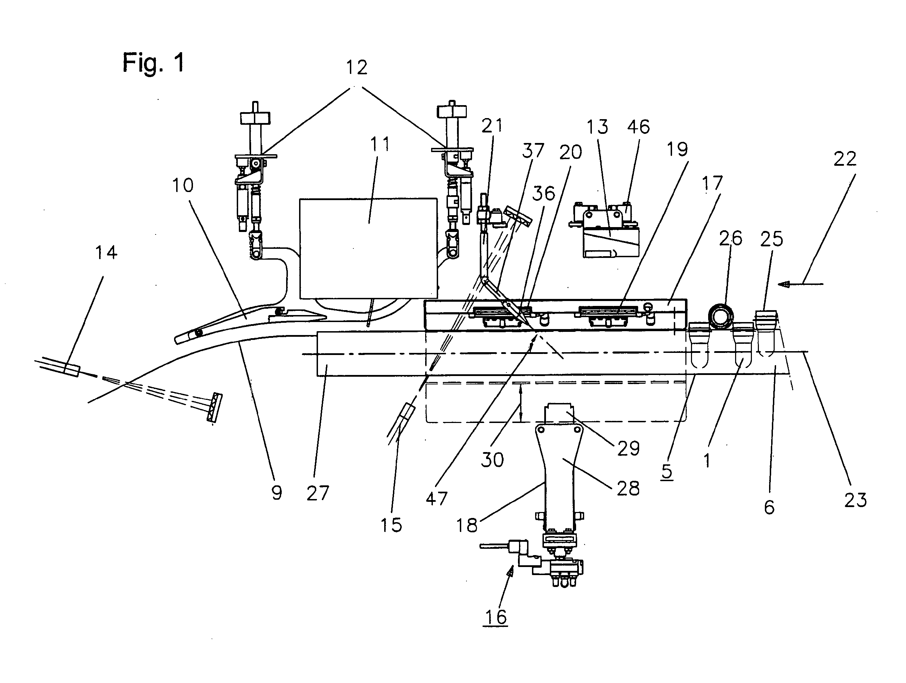

Fig.1 zeigt einen Ausschnitt aus einer Einrichtung zum Beschicken einer automatischen Produktionsstrasse für Hohlkörper mit Vorformlingen. Dargestellt ist ein Teilbereich der Vereinzelungs- und Fördervorrichtung im Bereiche der Vorrichtung zum Aussortieren von falsch positionierten zylindrischen Körpern bzw. Vorformlingen 1. Die Vorformlinge 1 werden mittels eines Rollensortierers bzw. Rollenförderers 5 in der Förderrichtung 22 durch die Vorrichtung transportiert. Die Aufgabe der Vorformlinge 1 auf den Rollensortierer 5 erfolgt durch eine nicht dargestellte Beschickungseinrichtung. Der Rollensortierer 5 umfasst zwei parallel zueinander angeordnete Rollen 6, 7, welche mit Abstand zueinander angeordnet sind und um die Achsen 23, 24 rotieren. Im dargestellten Bereich des Rollensortierers 5 werden die Vorformlinge 1 vereinzelt und falsch positionierte Vorformlinge 25, 26 werden aussortiert und vom Rollensortierer 5 entfernt. Am Endbereich 27 des Rollensortierers 5 werden die vereinzelten und korrekt ausgerichteten Vorformlinge 1 an Ablaufschienen 9 übergeben, auf welchen sie zu einer ebenfalls nicht dargestellten Formgebungseinrichtung für die Hohlkörper gefördert werden. Über dem Rollensortierer 5 ist ein optoelektronischer Sensor 13 angeordnet, mit welchem die Form und Lage der in Förderrichtung 22 durch die Vorrichtung transportierten Vorformlinge 1 erfasst wird. Der optoelektronische Sensor 13 kann durch andere Sensoren wie beispielsweise Lichtschranken oder Ultraschallsensoren ergänzt oder ersetzt werden. In Förderrichtung 22 gesehen, nach dem optoelektronischen Sensor 13, ist eine Auswurfeinrichtung 16 für falsch positionierte Vorformlinge 1 bzw. 25, 26 angeordnet. Diese Auswurfeinrichtung 16 umfasst eine Ausstossvorrichtung 18 und eine Ausblaseinrichtung 17. Die Ausstossvorrichtung 18 ist unter dem Rollensortierer 5 angeordnet und besteht aus einem pneumatischen oder hydraulischen Zylinder 28 mit einer Ausstossstange 29. Diese Ausstossstange 29 ist in Richtung der Pfeile 30 bewegbar und greift in den Zwischenraum (Abstand) 8 zwischen den Rollen 6 und 7 ein. Der Zylinder 28 wird vom Sensor 13, über eine Steuereinrichtung 46, angesteuert, sobald ein falsch positionierter Vorformling 1 bzw. 25, 26 erkannt wird, worauf die Ausstossstange 29 ausfährt und den falsch positionierten Vorformling, zum Beispiel 26, aus dem Rollensortierer 5 ausstösst.

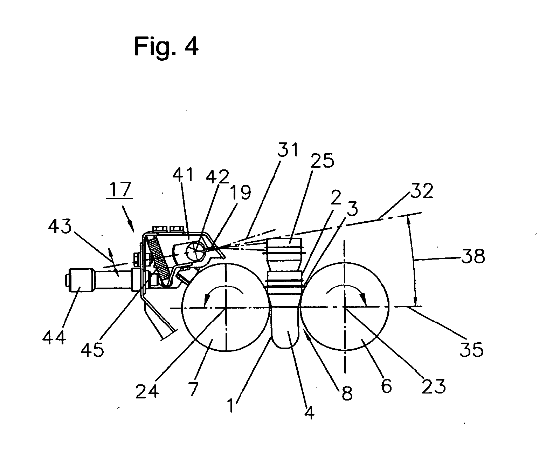

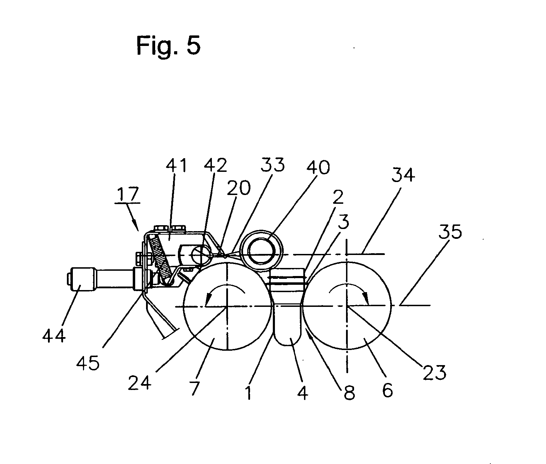

In einem Seitenbereich des Rollensortierers 5 ist die Ausblaseinrichtung 17 angeordnet, welche im beschriebenen Beispiel zwei Luftdüsen 19, 20 aufweist. Diese Luftdüsen 19, 20 werden ebenfalls von der mit dem Sensor 13 verbundenen Steuereinrichtung 46 angesteuert und es wird ein Luftstrom erzeugt, sobald ein falsch positionierter Vorformling 1 bzw. 25, 26 in den Bereich der Ausblasvorrichtung 17 transportiert wird und/oder ein Vorformling 1 mittels der Ausstossstange 29 aus dem Rollensortierer 5 ausgestossen wird. Dabei ist die Achse 32 des Luftstromes 31, welcher aus der Luftdüse 19 austritt, schräg zu einer fiktiven Ebene 35 ausgerichtet, welche durch die beiden Achsen 23, 24 der Rollen 6, 7 verläuft (s. Fig. 4). Die Achse 34 des Luftstromes 33, welcher aus der Luftdüse 20 austritt, ist parallel zu dieser fiktiven Ebene 35 ausgerichtet (s. Fig. 5). Weitere Einzelheiten zur Anordnung der Luftdüsen 19 und 20 sind zu den Figuren 4 und 5 beschrieben.

Über dem Rollensortierer 5 ist zusätzlich ein Ablenkelement 21 angeordnet. Dieses Ablenkelement 21 ist an einem Ende fest mit der Struktur der Vorrichtung verbunden, wobei das andere, gegen den Rollensortierer 5 gerichtete Ende 36 frei ist und einen geringen Abstand zu einer der Transportrollen 6, 7 aufweist. Die Achse 37 des Ablenkelementes 21 ist schräg zu den Achsen 23, 24 der Transportrollen 6, 7 angeordnet und schliesst mit diesen einen Winkel 47 zwischen 30-60°, vorzugsweise 45° ein.

Nach der Auswurfeinrichtung 16 folgt, in Förderrichtung 22 gesehen, eine Höhenführung 10, welche mit einem Rückstaurad bzw. Kickerrad 11 kombiniert ist. Diese Einrichtung dient dazu, falsch positionierte Vorformlinge 1 zu erfassen, welche eine derart ungewöhnliche falsche Position einnehmen, dass sie von den vorhergehenden Auswurfeinrichtungen 16 nicht erfasst werden konnten. Die Höhenführung 10 ist mit Hubeinrichtungen 12 ausgestattet, wodurch sie nach oben angehoben werden kann. Zu dieser Einrichtung 12 und der Höhenführung 10 gehören die beiden Lichtschranken 14 und 15, mittels welcher festgestellt wird, ob sich im Bereiche der Höhenführung 10 ein Rückstau von Vorformlingen 1 gebildet hat. Die Lichtschranken 14 und 15 sind dabei auf den Zwischenraum 8 zwischen den Rollen 6, 7 bzw. den Ablaufschienen 9 ausgerichtet und stellen fest, ob in diesem Bereich Vorformlinge vorhanden sind. Sind im Bereich der Lichtschranke 15 Vorformlinge 1 vorhanden, aber im Bereich der Lichtschranke 14 keine, so wird die Höhenführung 10 kurzfristig angehoben, um den Rückstau zu beheben. Allfällige störende Vorformlinge 1 werden vom Kickerrad 11 in den hinteren Bereich des Rollensortierers 5 zurückgeworfen.

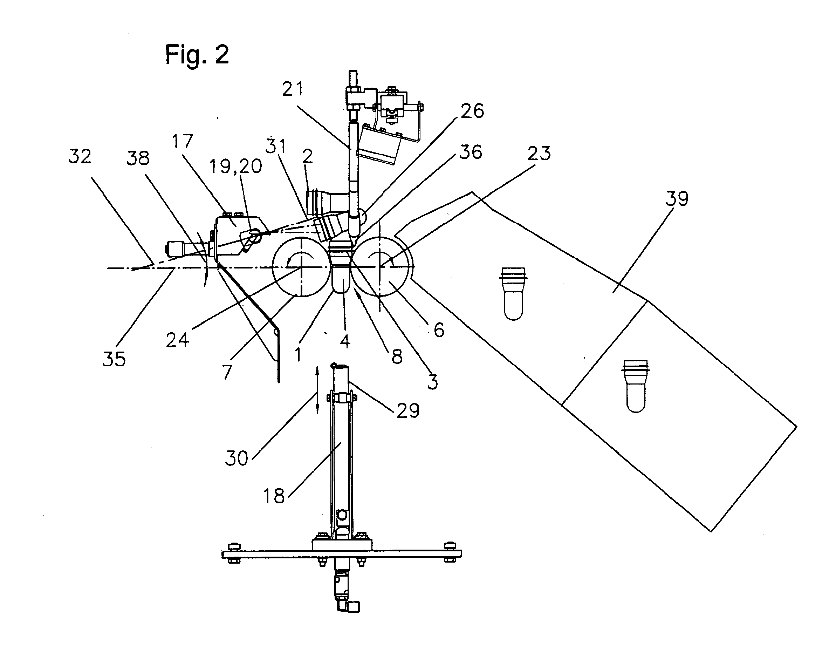

Fig. 2 zeigt einen Querschnitt durch die Sortiereinrichtung und den Rollensortierer 5 vor dem Bereich der Auswurfeinrichtung 16 und gegen die Förderrichtung 22 gesehen. In dieser Darstellung ist erkennbar, dass die Vorformlinge 1 einen Zylinderteil 4, einen Kragen 3, welcher einen grösseren Durchmesser aufweist als der Zylinderteil 4 und einen Kopf 2 mit einem Gewinde aufweisen. Korrekt positionierte Vorformlinge 1 liegen mit dem Kragen 3 am Mantel der Rollen 6 und 7 auf und der Zylinderteil 4 hängt infolge der Schwerkraft nach unten. Damit dies möglich ist, weisen die Rollen 6, 7 einen Abstand bzw. Zwischenraum 8 zueinander auf. Die Rollen 6, 7 rotieren dabei gegenläufig gegeneinander. Im Seitenbereich neben dem Rollensortierer 5 bzw. neben der Rolle 7 ist die Ausblasvorrichtung 17 angeordnet. Diese Ausblasvorrichtung 17 enthält die beiden Düsen 19 und 20 und eventuell auch noch weitere Düsen, sowie nicht dargestellte Druckluftanschlüsse und Steuerventile. Wenn die Düse 19 aktiviert wird, tritt ein Luftstrom 31 aus der Düse aus, wobei die Achse 32 dieses Luftstromes schräg ausgerichtet ist. Dabei schliesst die Achse 32 mit einer fiktiven Ebene 35, welche durch die Achsen 23, 24 der beiden Rollen 6, 7 gelegt ist, einen Winkel 38 ein. Dieser Winkel 38 ist verstellbar und kann an die geometrischen Erfordernisse unterschiedlich geformter Vorformlinge 1 angepasst werden. An der, der Ausblaseinrichtung 17 gegenüberliegenden Seite des Rollensortierers 5 ist eine Auffangvorrichtung 39 für die aussortierten und ausgeblasenen Vorformlinge angeordnet.

In Fig. 2 ist ein falsch positionierter Vorformling 26 dargestellt und zwar in einer Lage, wie sie vermehrt bei Vorformlingen auftritt, welche für so genannte Weithalsflaschen verwendet werden und im Verhältnis zum Durchmesser des Zylinderteils 4 einen grossen Durchmesser des Kopfes 2 und des Kragens 3 aufweisen. Wenn der Hub der Ausstossstange 29 der Ausstossvorrichtung 18 nicht genügend weit nach oben geht, wird dieser Vorformling 26 nicht durch die Ausstossstange 29 nach oben gestossen, sondern nur vom Luftstrom 31 erfasst und weggeblasen. Es hat sich aber gezeigt, dass in einzelnen Fällen insbesondere Vorformlinge mit grossem Kopf- und Kragendurchmesser so auf den Rollen 6, 7 aufliegen, dass sie dem Luftstrom 31 keine genügende Angriffsfläche bieten. Um derartige Vorformlinge 26 trotzdem aussortieren und ausblasen zu können, ist das Ablenkelement 21 angeordnet, an welchem derartige Vorformlinge 26 anstehen und in eine andere Position umgelenkt werden. In der umgelenkten Position können sie dann entweder vom Luftstrom 31 der Düse 19 oder vom Luftstrom 33 der nachfolgenden Düse 20 erfasst und ausgeblasen werden.

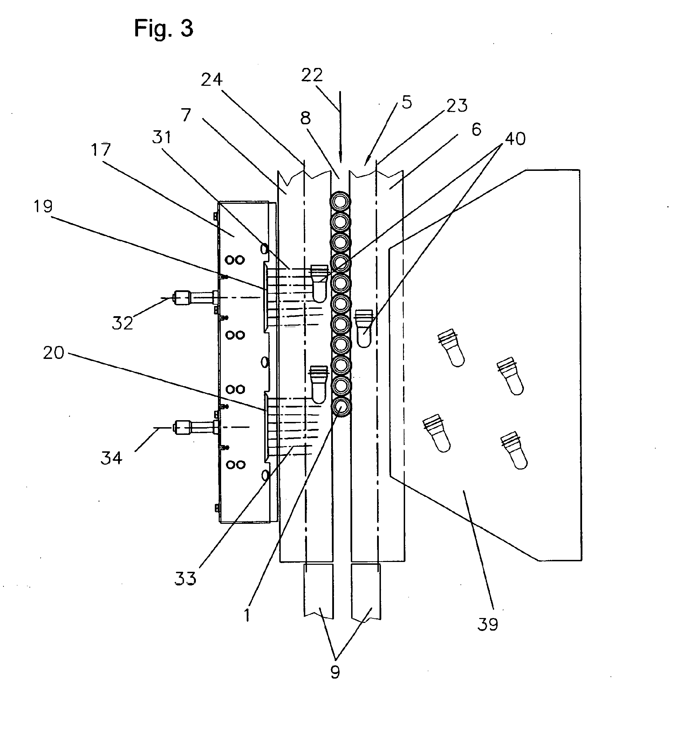

In Fig. 3 ist der Bereich der Auswurfeinrichtung 16 in einer vereinfachten Ansicht von oben gesehen dargestellt. In dieser Darstellung sind zwei falsch positionierte Vorformlinge 40 gezeigt, welche parallel zu den Achsen 23, 24 der Rollen 6, 7 auf diesen Rollen und den korrekt eingeordneten Vorformlingen 1 aufliegen. In dieser Position können derartige falsch positionierte Vorformlinge 40 nicht von der Ausstossvorrichtung 18 und der Ausstossstange 29 ausgestossen werden. Sie werden jedoch vom Luftstrom 31 der ersten Düse 19 oder dann vom Luftstrom 33 der zweiten Düse 20 erfasst und in die Auffangvorrichtung 39 ausgeblasen. Andernfalls stehen sie nach dem Weitertransport in Förderrichtung 22 an der Höhenführung 10 an und werden vom Kickerrad 11 erfasst und zurückgeworfen. In dieser Darstellung ist auch ersichtlich, dass die beiden Luftströme 31 und 33 der beiden Düsen 19 und 20, in Förderrichtung 22 gesehen, eine grössere Abmessung aufweisen als quer dazu. Durch diese Formgebung des Querschnittes der beiden Luftströme 31 und 33 wird eine grössere Angriffsfläche an den Vorformlingen 1 erfasst und falsch positionierte Vorformlinge 25, 26 und 40 werden während ihres Transportes in Förderrichtung 22 einer längeren Zeit den beiden Luftströmen 31 und 33 ausgesetzt.

Fig. 4 zeigt einen Querschnitt im Bereiche der Luftdüsen 19 mit der Verstelleinrichtung für den Anstellwinkel 38 des Luftstromes 31. Zudem sind in dieser Darstellung falsch positionierte Vorformlinge 25 dargestellt, wobei zwei Vorformlinge ineinander stecken, d.h. sogenannt vernestet sind. Auch diese falsche Anordnung tritt bei Vorformlingen mit einem grossen Kopf- und Kragendurchmesser häufiger auf als bei Vorformlingen mit einem Normaldurchmesser. Da die Achse 32 des Luftstromes 31, welcher aus der Luftdüse 19 austritt, mit dem Winkel 38 schräg angestellt ist, wird der Kragen 3 des oberen der vernesteten Vorformlinge 25 vom Luftstrom 31 von unten angeblasen. Dabei ist die Angriffsfläche für den Luftstrom 31 am Kragen 3 gross genug, um den oberen Vorformling 25 aus dem unteren herauszuheben und wegzublasen. Die Luftdüse 19 ist an einer Halterung 41 befestigt und ist um eine Drehachse 42 in Richtung der Pfeile 43 schwenkbar. Mittels einer Einstellvorrichtung 44 kann der Winkel 38, welcher die Achse 32 des Luftstromes 31 zur fiktiven Ebene 35 bildet, verstellt werden. Eine Rückholfeder 45 hält die Luftdüsen 19 in der gewünschten und eingestellten schrägen Position.

In Fig. 5 sind die gleichen Elemente wie in Fig. 4 dargestellt, jedoch in einem Querschnitt im Bereiche der Luftdüse 20. Diese Luftdüse 20 ist so eingestellt, dass die Achse 34 des Luftstromes 33 etwa parallel zur fiktiven Ebene 35 verläuft. Ein falsch positionierter Vorformling 40 liegt in dieser Darstellung parallel auf der Rolle 7 und den korrekt positionierten Vorformlingen 1 auf. Wenn die Achse 34 des Luftstromes 33 parallel zur fiktiven Ebene 35 verläuft oder nur mit einem kleinen Anstellwinkel zu dieser Ebene 35 angestellt ist, kann der Luftstrom 33 den falsch positionierten Vorformling 40 besser erfassen und ausblasen als die mit grösserem Winkel 38 schräg angestellte Luftdüse 19.

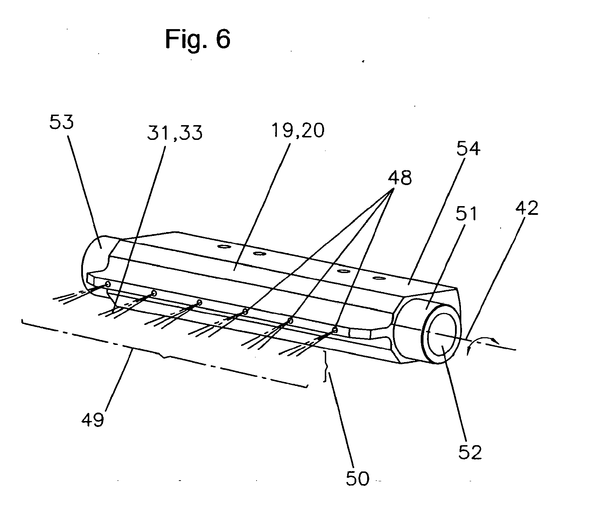

Fig. 6 zeigt eine der beiden gleich ausgebildeten Luftdüsen 19 bzw. 20. An der Vorderseite der Luftdüsen 19, 20 sind mehrere Luftaustrittsöffnungen 48 angeordnet, im dargestellten Beispiel fünf. Durch diese Anordnung entsteht ein Luftstrom 31 bzw. 33, dessen Querschnitt eine Gesamtbreite 49 aufweist, welche grösser ist als die Höhe 50 dieses Querschnittes. Dabei soll die Breite 49 des Querschnittes mindestens doppelt so gross sein wie dessen Höhe 50. Zweckmässigerweise ist die Gesamtbreite 49, wie im dargestellten Beispiel, ein Mehrfaches der Höhe 50. An den Seitenbereichen der Luftdüsen 19, 20 sind Lagerzapfen 51, 53 angeordnet, an welchen die Luftdüsen 19, 20 um die Achse 42 schwenkbar gelagert sind. Die zugehörige Schwenkeinrichtung ist zu den Figuren 4 und 5 beschrieben. Das Gehäuse 54 der Luftdüsen ist hohl und ist über eine Luftzuführung 52 im Lagerzapfen 51 mit einer nicht dargestellten Druckluftleitung verbunden. Über diese Druckluftleitung und die Luftzuführung 52 werden die Luftdüsen 19, 20 im Bedarfsfall mit Druckluft versorgt, welche dann über die Luftaustrittsöffnungen 48 austritt und den Luftstrom 31 bzw. 33 bildet. Die Steuerung der Druckluftzufuhr erfolgt über die in Figur 1 dargestellte Steuereinrichtung 46.

### BEZUGSZEICHENLISTE

| | | | |
|---|---|---|---|
| 1 | zylindrischer Körper / Vorformling | 28 | Zylinder (18) |
| 2 | Kopf (1) | 29 | Ausstossstange (18) |
| 3 | Kragen (1) | 30 | Pfeile (29) |
| 4 | Zylinderteil | 31 | Luftstrom (19) |
| 5 | Rollensortierer | 32 | Achse (31) |
| 6 | Rolle (3) | 33 | Luftstrom (20) |
| 7 | Rolle (5) | 34 | Achse (33) |
| 8 | Abstand (6/7) / Zwischenraum | 35 | fiktive Ebene (23/24) |
| 9 | Ablaufschiene | 36 | Ende (21) |
| 10 | Höhenführung | 37 | Achse (21) |
| 11 | Rückstaurad / Kickerrad | 38 | Winkel (31/35) |
| 12 | Hubeinrichtung (10) | 39 | Auffangvorrichtung |
| 13 | optoelektronischer Sensor | 40 | falsch positionierter Vorformling |
| 14 | Lichtschranke | 41 | Halterung (19) |
| 15 | Lichtschranke | 42 | Drehachse (19/20) |
| 16 | Auswurfeinrichtung | 43 | Pfeile |
| 17 | Ausblaseinrichtung | 44 | Einstellvorrichtung |
| 18 | Ausstossvorrichtung | 45 | Rückholfeder |
| 19 | Luftdüse (schräg) | 46 | Steuereinrichtung |
| 20 | Luftdüse (horizontal) | 47 | Winkel (37/ 23, 24) |
| 21 | Ablenkelement | 48 | Luftaustrittsöffnungen |
| 22 | Förderrichtung | 49 | Gesamtbreite (31/33) |
| 23 | Achse (6) | 50 | Höhe (31/33) |
| 24 | Achse (7) | 51 | Lagerzapfen (19/20) |
| 25 | falsch positionierter Vorformling | 52 | Luftzuführung (51) |
| 26 | falsch positionierter Vorformling | 53 | Lagerzapfen (19/20) |
| 27 | Endbereich (5) | 54 | Gehäuse (19/20) |

## Patentansprüche

1. Vorrichtung zum Aussortieren von falsch positionierten zylindrischen Körpern (1), wie Vorformlingen für Hohlkörpern, in einer Vereinzelungs- und Fördervorrichtung, wobei die zylindrischen Körper (1) einen Kopf (2) mit einem Kragen (3) aufweisen, mit einem Rollensortierer (5), welcher zwei in Förderrichtung parallel und mit Abstand zueinander angeordnete Rollen (6, 7) aufweist, zwischen welchen die zylindrischen Körper (1) hängend positioniert sind, und mit einer Auswurfeinrichtung (16), mittels welcher nicht korrekt zwischen den Rollen (6, 7) positionierte zylindrische Körper (1) aus der Vorrichtung ausgeschieden werden, **dadurch gekennzeichnet, dass** die Auswurfeinrichtung (16) seitlich neben den Rollen (6, 7) angeordnete Luftdüsen (19, 20) zum Wegblasen falsch positionierter zylindrischer Körper (1) aufweist, dass mindestens eine Luftdüse (19) so ausgerichtet ist, dass die Strömungsachse (32) des aus der Düse (19) austretenden Luftstromes (31) etwa quer zur Förderrichtung (22) der zylindrischen Körper (1) gerichtet ist und mit einem Anstellwinkel (38) gegen den Kopf (2) und Kragen (3) der zylindrischen Körper (1) gerichtet ist und dass die Luftdüse (19) schwenkbar befestigt und der Anstellwinkel (38) der Strömungsachse (32) des Luftstromes (31) gegenüber dem Kopf (2) und dem Kragen (3) der zylindrischen Körper (1) einstellbar ist und dass die Strömungsachse (32) der mindestens einen Luftdüse (19) mit einem positiven Anstellwinkel (38) schräg zu einer durch die Achsen (23, 24) der beiden Transportrollen (6, 7) gelegten fiktiven Ebene (35) ausgerichtet ist.

2. Vorrichtung nach Patentanspruch 1 , **dadurch gekennzeichnet, dass** der Querschnitt des aus der Luftdüse (19) austretenden Luftstromes (31) eine langgestreckte Form aufweist und die in Förderrichtung (22) der zylindrischen Körper (1) gerichtete Breite (49) des Querschnitts eine grössere Abmessung aufweist als die etwa rechtwinklig dazu gerichtete Höhe (50) des Querschnitts.

3. Vorrichtung nach Patentanspruch 1 oder 2, **dadurch gekennzeichnet, dass** in Förderrichtung (22) der zylindrischen Körper gesehen mehrere Luftdüsen (19, 20) nacheinander angeordnet sind, mindestens bei einer ersten Düse (20) die Strömungsachse (34) des Luftstromes (33) etwa parallel zu einer, durch die Achsen (23, 24) der beiden Transportrollen (6, 7) gelegten fiktiven Ebene (35) ausgerichtet ist.

4. Vorrichtung nach einem der Patentansprüche 1 bis 3, **dadurch gekennzeichnet, dass** die Luftdüse (19, 20) mehrere in Förderrichtung (22) der zylindrischen Körper (1) nebeneinander angeordnete Luftaustrittsöffnungen (48) aufweist und die Gesamtbreite (49) des Querschnittes des aus diesen Öffnungen (48) austretenden Luftstromes (31, 33) mindestens doppelt so gross ist wie die Höhe (50) des Luftstromes (31, 33).

5. Vorrichtung nach einem der Patentansprüche 1 bis 4, **dadurch gekennzeichnet, dass** über den Rollen (6, 7) des Rollensortierers (5) und im Auflagebereich der Kragen (3) der zylindrischen Körper (1) auf diesen Transportrollen (6, 7) mindestens ein Ablenkelement (21) angeordnet ist, wobei die Längsachse (37) dieses Ablenkelementes (21) schräg gegen die Förderrichtung (22) der zylindrischen Körper (1) gerichtet ist und dass das gegen die Transportrollen (6, 7) gerichtete Ende (36) dieses Ablenkelementes (21) die Transportrollen (6, 7) nicht berührt.

6. Vorrichtung nach Patentanspruch 5, **dadurch gekennzeichnet, dass** die Längsachse (37) des Ablenkelementes (21) mit der Längsachse 23 oder 24 einer der Transportrollen (6, 7) einen Winkel (47) von 30-60° einschliesst.

7. Vorrichtung nach Patentanspruch 5 oder 6, **dadurch gekennzeichnet, dass** das Ablenkelement (21) ein Rundstab mit einem konischen Ende (36) ist.

8. Vorrichtung nach einem der Patentansprüche 1 bis 5, **dadurch gekennzeichnet, dass** über dem Rollensortierer (5) und in Förderrichtung (22) gesehen vor der Auswurfeinrichtung (16), mit der Ausblasvorrichtung (17) und der Ausstossvorrichtung (18), ein optoelektronischer Sensor (13) mit einer Steuereinrichtung (46) für die Auswurfeinrichtungen (16, 17, 18) angeordnet ist.

## Claims

1. A device for sorting out incorrectly positioned cylindrical bodies (1), such as preforms for hollow bodies, in a singling and conveying unit, wherein the cylindrical bodies (1) have a head (2) with a collar (3), said device including a roller sorter (5) which has two rollers (6, 7), which are arranged in parallel in the conveying direction and are spaced apart from each other, between which the cylindrical bodies (1) are positioned in a suspended manner, and including an ejecting device (16) by means of which cylindrical bodies (1) which are incorrectly positioned between the rollers (6, 7) are removed out of the device, **characterized in that** the ejecting device (16) has air nozzles (19, 20) arranged laterally next to the rollers (6, 7) for blowing away incorrectly positioned cylindrical bodies (1), that at least one air nozzle (19) is aligned such that the axis of flow (32) of the air flow (31) emerging from the nozzle (19) is directed approximately transversely with respect to the conveying direction (22) of the cylindrical bodies (1) and is directed at an angle of attack (38) against the head (2) and collar (3) of the cylindrical bodies (1) and **in that** the air nozzle (19) is fastened so as to be pivotable and the angle of attack (38) of the axis of flow (32) of the air flow (31) is adjustable in relation to the head (2) and the collar (3) of the cylindrical bodies (1) and that the axis of flow (32) of the at least one air nozzle (19) is aligned at a positive angle of attack (38), in an inclined manner with respect to an imaginary plane (35) placed through the axes (23, 24) of the two conveying rollers (6, 7).

2. The device as claimed in claim 1, **characterized in that** the cross section of the air flow (31) emerging from the air nozzle (19) has an elongated form and the width (49) of the cross section directed in the conveying direction (22) of the cylindrical bodies (1) has a larger dimension than the height (50) of the cross section directed approximately at right angles thereto.

3. The device as claimed in claim 1 or 2, **characterized in that**, when viewed in the conveying direction (22) of the cylindrical bodies, several air nozzles (19, 20) are arranged one after the other, at least in the case of a first nozzle (20) the axis of flow (34) of the air flow (33) is aligned approximately parallel to an imaginary plane (35) placed through the axes (23, 24) of the two conveying rollers (6, 7).

4. The device as claimed in one of claims 1 to 3, **characterized in that** the air nozzle (19, 20) has several air outlet openings (48) which are arranged next to one another in the conveying direction (22) of the cylindrical bodies (1) and the overall width (49) of the cross section of the air flow (31, 33) emerging from said openings (48) is at least twice as large as the height (50) of the air flow (31, 33).

5. The device as claimed in one of claims 1 to 4, **characterized in that** at least one deflecting element (21) is arranged above the rollers (6, 7) of the roller sorter (5) and in the contact region of the collars (3) of the cylindrical bodies (1) on said conveying rollers (6, 7), wherein the longitudinal axis (37) of said deflecting element (21) is directed in an inclined manner in opposition to the conveying direction (22) of the cylindrical bodies (1) and **in that** the end (36) of said deflecting element (21) directed in opposition to the conveying rollers (6, 7) does not contact the conveying rollers (6, 7).

6. The device as claimed in claim 5, **characterized in that** the longitudinal axis (37) of the deflecting element (21) encloses an angle (47) of 30-60° with the longitudinal axis (23 or 24) of one of the conveying rollers (6, 7).

7. The device as claimed in claim 5 or 6, **characterized in that** the deflecting element (21) is a round rod with a conical end (36).

8. The device as claimed in one of claims 1 to 5, **characterized in that** an optoelectronic sensor (13) with a control device (46) for the ejecting devices (16, 17, 18) is arranged above the roller sorter (5) and, when viewed in the conveying direction (22), in front of the ejecting device (16), with the blow-out device (17) and the discharging device (18).

## Revendications

1. Dispositif pour trier et éliminer des corps cylindriques (1) mal positionnés, tels que des ébauches pour corps creux, dans un dispositif de séparation et de transport, les corps cylindriques (1) présentant une tête (2) avec un collet (3), comprenant un dispositif de triage à rouleaux (5) qui présente deux rouleaux (6, 7) disposés parallèlement et à distance l'un à l'autre dans la direction de transport, entre lesquels rouleaux les corps cylindriques (1) sont positionnés en suspension, et comprenant un dispositif d'éjection (16), au moyen duquel des corps cylindriques (1) non positionnés correctement entre les rouleaux (6, 7) sont évacués du dispositif, **caractérisé en ce que** le dispositif d'éjection (16) présente des buses à air (19, 20) disposées latéralement à côté des rouleaux (6, 7) pour évacuer par soufflage des corps cylindriques (1) mal positionnés, **en ce qu'**au moins une buse à air (19) est orientée de telle sorte que l'axe d'écoulement (32) du flux d'air (31) sortant de la buse (19) soit orienté approximativement transversalement à la direction de transport (22) des corps cylindriques (1) et soit orienté avec un angle d'inclinaison (38) vers la tête (2) et le collet (3) des corps cylindriques (1) et **en ce que** la buse à air (19) est fixée de manière à pouvoir pivoter et l'angle d'inclinaison (38) de l'axe d'écoulement (32) du flux d'air (31) peut être ajusté par rapport à la tête (2) et au collet (3) des corps cylindriques (1) et **en ce que** l'axe d'écoulement (32) de l'au moins une buse à air (19) est orienté avec un angle d'inclinaison positif (38) obliquement par rapport à un plan fictif (35) passant par les axes (23, 24) des deux rouleaux de transport (6, 7).

2. Dispositif selon la revendication 1, **caractérisé en ce que** la section transversale du flux d'air (31) sortant de la buse à air (19) présente une forme allongée et la largeur (49) de la section transversale orientée dans la direction de transport (22) des corps cylindriques (1) présente une plus grande dimension que la hauteur (50) de la section transversale orientée approximativement perpendiculairement par rapport à celle-ci.

3. Dispositif selon la revendication 1 ou 2, **caractérisé en ce que**, vu dans la direction de transport (22) des corps cylindriques, plusieurs buses à air (19, 20) sont disposées les unes derrière les autres, et pour au moins une première buse (20), l'axe d'écoulement (34) du flux d'air (33) est orienté approximativement parallèlement à un plan fictif (35) passant par les axes (23, 24) des deux rouleaux de transport (6, 7).

4. Dispositif selon l'une quelconque des revendications 1 à 3, **caractérisé en ce que** la buse à air (19, 20) présente plusieurs ouvertures de sortie d'air (48) disposées les unes à côté des autres dans la direction de transport (22) des corps cylindriques (1) et la largeur totale (49) de la section transversale du flux d'air (31, 33) sortant de ces ouvertures (48) est au moins deux fois plus grande que la hauteur (50) du flux d'air (31, 33).

5. Dispositif selon l'une quelconque des revendications 1 à 4, **caractérisé en ce qu'**au moins un élément de déflexion (21) est disposé au-dessus des rouleaux (6, 7) du dispositif de triage à rouleaux (5) et dans la région d'appui des collets (3) des corps cylindriques (1) sur ces rouleaux de transport (6, 7), l'axe longitudinal (37) de cet élément de déflexion (21) étant orienté obliquement vers la direction de transport (22) des corps cylindriques (1) et **en ce que** l'extrémité (36) orientée vers les rouleaux de transport (6, 7) de cet élément de déflexion (21) ne vient pas en contact avec les rouleaux de transport (6, 7).

6. Dispositif selon la revendication 5, **caractérisé en ce que** l'axe longitudinal (37) de l'élément de déflexion (21) forme avec l'axe longitudinal (23 ou 24) de l'un des rouleaux de transport (6, 7) un angle (47) de 30 à 60°.

7. Dispositif selon la revendication 5 ou 6, **caractérisé en ce que** l'élément de déflexion (21) est une barre ronde ayant une extrémité conique (36).

8. Dispositif selon l'une quelconque des revendications 1 à 5, **caractérisé en ce qu'**un capteur optoélectronique (13) avec un système de commande (46) pour les dispositifs d'éjection (16, 17, 18) est disposé au-dessus du dispositif de triage à rouleaux (5) et vu dans la direction de transport (22), avant le dispositif d'éjection (16), avec le dispositif d'évacuation par soufflage (17) et le dispositif d'éjection (18).
